# EUROPEAN PATENT APPLICATION

(11) **EP 3 216 898 A1**
(43) Date of publication of application: **13.09.2017**
(21) Application number: 17159920.2
(22) Date of filing: 08.03.2017
(51) Int. Cl.: D01D 1/02, D01F 6/18, D01F 6/38, D01F 6/40, C08J 3/11

(54) **PROCESS FOR THE PRODUCTION OF ACRYLIC OR MODACRYLIC FIBERS**

(30) Priority: 09.03.2016 IT UA20161499
(71) Applicant: Montefibre Mae Technologies S.R.L., 20145 Milan (IT)
(72) Inventor: FRANCALANCI, Franco, I-28100 NOVARA (IT); MARINETTI, Massimo, I-30172 MESTRE (VE) (IT); PROSERPIO, Roberto, I-22066 MARIANO COMENSE (CO) (IT)
(74) Representative: De Gregori, Antonella

(57) **Abstract**

A process is described for the preparation of a homogeneous spinning solution for the production of acrylic or modacrylic fibers which comprises the following steps:
i) preparation of an intimate mixture of a homopolymer or copolymer of acrylonitrile in powder form with a solid solvent in powder form, at a temperature lower than the melting point of the solid solvent;
ii) gradually heating the intimate mixture of solids coming from step i) to a temperature ranging from 70°C to 150°C in a time ranging from 0.5 to 30 minutes, until the complete dissolution of the homopolymer or copolymer in the solvent and the formation of a homogeneous spinning solution. Said spinning solution is then fed to a storage tank or to the spinning line.

## Description

The present invention relates to a process for the production of acrylic or modacrylic fibers, in particular a process for the preparation of a spinning solution for the production of acrylic or modacrylic fibers.

The present invention falls within the field relating to the production of acrylic fibers which comprises the preparation of polymers starting from acrylonitrile or copolymers prevalently composed of acrylonitrile (90-99% by weight with respect to the total weight of the polymer) and one or more other comonomers in a quantity generally ranging from 1 to 10% by weight with respect to the total weight of the polymer.

Preferred comonomers are both neutral vinyl molecules such as methyl acrylate, methyl methacrylate, vinyl acetate, acrylamide and the like, and molecules carrying one or more acid groups such as acrylic acid, itaconic acid, sulfonated styrenes and the like, or other comonomers suitable for conferring different physico-chemical characteristics to the material. The present invention also relates to a process for the preparation of a spinning solution for the production of fibers defined as modacrylic fibers, i.e. fibers of copolymers wherein acrylonitrile is present in a quantity ranging from 50 to 85% by weight with respect to the total weight of the polymer and one or more other comonomers are present a quantity generally ranging from 15 to 50% by weight with respect to the total weight of the polymer. In the case of modacrylic fibers, the preferred copolymers are generally halogenated vinyl monomers such as vinyl chloride, vinylidene chloride, vinyl bromide, or other comonomers capable of conferring characteristics of low flammability to the fiber.

The polymers and copolymers thus prepared are then subjected to spinning to produce fibers which are collected in tows, suitable for being subsequently transformed into end-products by means of various processing techniques, for both a textile use and also for a technical use. Particular types of acrylic fiber are "precursor" fibers for carbon fiber: these are high-molecular-weight copolymers of acrylonitrile and one or more comonomers, selected from those described above for acrylic fibers, in a quantity generally ranging from 1 to 5% by weight with respect to the total weight of the polymer. Carbon fibers are then obtained by means of a suitable thermal treatment of these "precursor" fibers based on polyacrylonitrile. There are various industrial processes for the preparation of acrylic or modacrylic fibers, which use different polymerization and spinning methods.

The state of the art can be divided and schematized as follows:

### A. Discontinuous processes (two-step processes)

In two-step discontinuous processes, the polymer is generally produced in aqueous suspension, isolated and subsequently dissolved in a suitable solvent to be spun and transformed into fiber, or precursor fiber, in the case of carbon fibers. The solvents commonly used for the preparation of the spinning solution are: dimethylacetamide (DMCA), dimethylformamide (DMF) and an aqueous solution of sodium thiocyanate (NaSCN).

### B. Continuous processes (one-step processes)

In continuous processes, on the contrary, the polymerization takes place in a solvent and the solution thus obtained is directly used in spinning without the intermediate isolation of the polymer. The solvents commonly used in this processes are: dimethylformamide (DMF), dimethylsulfoxide (DMSO), aqueous solution of zinc chloride (ZnCl₂) and aqueous solution of sodium thiocyanate (NaSCN).

Discontinuous processes offer significant advantages from a management point of view: the two polymerization and spinning steps are in fact independent, the starting monomers do not have to be purified and the traces of impurities and non-reacted monomers are easily separated from the polymer in powder form. DMSO is a solvent of particular interest, thanks to its capacity of forming solutions with a high polymer concentration, due to the low toxicity, and easy recovery and recycling, in addition to the absence of corrosion phenomena associated with its use.

There are examples in literature in which discontinuous processes have been carried out, on a laboratory scale, preparing spinning solutions by dissolution of acrylonitrile polymers and copolymers in DSMO.

Patent EP 2 894 243 B1 describes a process for the production of acrylic fibers in two steps, which exploits both the advantages of polymerization in aqueous suspension, and the advantages of the spinning of a polymer solution in DMSO. This process, characterized by a high efficiency and a low environmental impact, overcomes the drawbacks historically connected with the use of DMSO as solvent of a polymer based on polyacrylonitrile (such as the formation of gels and insoluble agglomerates) by reducing the solvent capacity of DMSO in the initial mixing step of the polymer with the solvent itself. This result is achieved by the addition of reduced quantities of water to the DMSO with a consequent reduction in the operating temperature of the solvent mixture thus obtained, which is possible specifically due to the presence of water. The solution described in EP 2 894 243 B1 therefore envisages reduced quantities of water in the spinning dope, more specifically quantities of water of up to 5% by weight.

Even the presence of such a reduced quantity of water, however, some disadvantageous aspects could remain, in relation to both the type of polymer and to the spinning techniques selected: the presence of water, in fact, can prove to be undesired for obtaining fibers having certain characteristics, optimum in relation to the final use, thus making it necessary to proceed with the removal of the water by distillation or similar techniques, which make the overall production process heavier.

In EP 2 894 243 B1, it is clearly indicated that a solvent consisting 100% of liquid DMSO could not be used as this involved the formation of gels and insoluble agglomerates, thus exceeding the operating conditions of the filters in extremely short times, specifically due to a poor quality of the spinning solution in terms of homogeneity.

The objective of the present invention is therefore to find a process for the production of acrylic or modacrylic fibers which overcomes the drawbacks of the processes of the state of the art.

### Detailed description of the invention

The object of the present invention therefore relates to a process for the preparation of a homogeneous spinning solution for the production of acrylic or modacrylic fibers which comprises the following steps:
i) preparation of an intimate mixture of a homopolymer or copolymer of acrylonitrile in powder form and a solid solvent in powder form, at a temperature lower than the melting point of the solid solvent;
ii) gradually heating of the intimate mixture of solids coming from step i) up to a temperature ranging from 70°C to 150°C in a time ranging from 0.5 to 30 minutes, until the complete dissolution of the homopolymer or copolymer in the solvent and the formation of a homogeneous solution.

In step i), a temperature lower than the melting point of the solid solvent refers to a temperature at least 5-10°C lower than the melting point of the solvent, more specifically a temperature which is such that the solvent does not melt.

Step i) is preferably carried out with equipment which allows the correct intimate mixing and homogenization of the powders, obtaining a mixture of the solvent in solid phase and polymer in powder form. Said mixture can be obtained by means of a process in continuous, by continuously feeding homopolymers or copolymers of acrylonitrile and the solvent in powder form to said equipment or batchwise, charging moderate quantities of homopolymers or copolymers of acrylonitrile and solvent in powder form into equipment that treats the product batchwise, obtaining discrete charges of mixed powders.

Step ii) is carried out with suitable equipment which effects a mixing of the mass undergoing melting and dissolution such as, for example: extruders, screw conveyors, mixers or kneaders.

The homogeneous spinning solution obtained at the end of the process according to the present invention is free of gel and undissolved residues and can be fed directly to the spinning line (apparatus) or to a storage tank.

The process according to the present invention thus allows a solution of homopolymers or copolymers of acrylonitrile to be obtained, free of gel and without the formation of insoluble agglomerates, annulling the solvent capacity of the solvent in the first contact phase with the polymer in powder form; the solvent in solid phase and in powder form is in fact incapable of solubilizing the polymer in powder form.

In this way, the formation of an intimate solid mixture is obtained, which is then transformed into a homogeneous solution, free of gel and undissolved material, by heating said intimate mixture of powders.

The process according to the present invention therefore allows the two polymerization and spinning steps to be easily integrated.

The solid solvent in powder form used in step i) is preferably selected from dimethylsulfoxide (DMSO, m.p. 19°C), dimethylsulfone (m.p. 109°C), ethylene carbonate (m.p. 37°C), mixtures of ethylene carbonate/propylene carbonate, etc., and is even more preferably DMSO.

When the solid solvent in powder form used in step i) is DMSO, step i) for the preparation of the intimate mixture of homopolymer or copolymer of acrylonitrile in powder form and solid DMSO in powder form is carried out at a temperature ranging from -5°C to 10°C.

The intimate mixture of polymer and solvent in powder form comprises a quantity of polymer ranging from 15 to 26% by weight with respect to the total weight of the solvent and polymer, which therefore corresponds to a percentage ranging from 15 to 26% by weight of polymer in the spinning solution.

In the present description, the term polymer refers in general to both homopolymers obtained starting from acrylonitrile and copolymers obtained starting from acrylonitrile and one or more other comonomers.

Among the copolymers, the copolymers used in the preparation of modacrylic fibers are also included.

Step i), effected by means of the intimate physical mixing of the polymers in powder form with the solvent, preferably with pulverized DMSO, at a temperature lower than the melting point of the same solvent, therefore allows a homogeneous distribution of the solid solvent on the polymer, which facilitates the intimate imbibition of the polymer powder with the solvent. When, in step ii), the intimate mixture of solids is gradually heated to the melting point of the solvent in a time ranging from 0.5 to 30 minutes, with the consequent melting of the solvent intimately mixed with the polymer in powder form, said homogeneous distribution allows a complete dissolution of the polymer powder and the formation of a homogeneous solution, preventing the formation of conglomerations which are difficult to disperse and solubilize.

In particular, the polymers according to the present invention are high-molecular-weight polymers, with a molecular weight ranging from 80,000 to 200,000 Da, or low-molecular-weight polymers, with a molecular weight ranging from 40,000 to 55,000 Da.

In the process according to the present invention, the solvent in powder form, preferably DMSO, used for the preparation of the solid mixture in step i) can be obtained, for example
- by means of the "spray-drying" or "spray congealing" process at a temperature suitable for the solidification of the solvent or
- by reduction to powder by grinding the solvent solidified in mass or in large crystals or
- by precipitation from solvent-non-solvent mixtures or by slow crystallization by cooling into small crystals, etc.

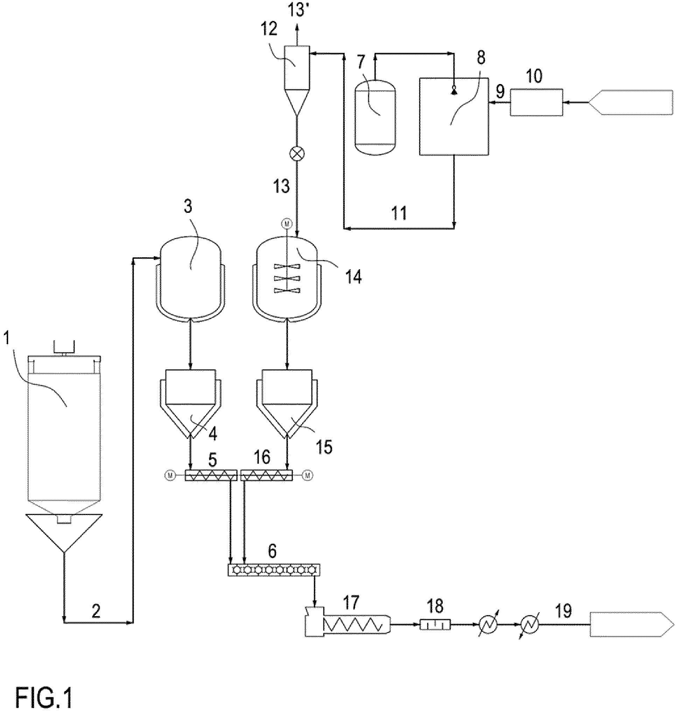

The process described in steps i) and ii) is schematically represented in Figure 1, described in greater detail hereunder.

Step i) of the process according to the present invention comprises the intimate mixing of the two powders and can be carried out with the use of a mixer in continuous (as represented in Figure 1) or batchwise maintained at a temperature lower than the melting point of the solvent, therefore suitable for preventing the melting of the solvent itself.

In the subsequent step ii) of the process according to the present invention, the mixture can be fed to an extruder or other system which, upon continuing the intimate mixing of the polymer and solvent, allows a gradual heating of the solid mixture until reaching the melting point of the solvent, preferably DMSO, thus obtaining the formation of the homogeneous spinning solution (also called "dope").

The transformation of the solvent, preferably DMSO, from solid to liquid, takes place gradually and homogeneously within the solid mixture, thus limiting the aggressiveness of the solvent with respect to the polymer which could lead to the formation of clots of solid polymer enveloped by a layer of solution and, ultimately, to the formation of gels and insoluble aggregates.

It is known, in fact, that as said gels cannot be easily dispersed in a high-viscosity matrix such as the spinning solutions, they are extremely difficult to attack. In particular, said gels can keep particles of undissolved polymer within them, giving the spinning solution a low quality. The dissolving operations of the solid mixture and its transformation into a homogeneous spinning solution or dope can also be carried out batchwise, effecting a gradual heating of the whole mass and keeping the mixture under stirring by means of suitable impellers capable of handling the variations in viscosity of the medium undergoing dissolution.

The polymeric solution can also be fed to systems capable of completing and refining the dissolution process of the polymer such as, for example, heat exchangers for optimizing the temperature, static or dynamic mixers, etc.

The process for the preparation of the homogeneous spinning solution for the production of acrylic fibers according to the present invention preferably comprises the preparation of polymers, such as homopolymers starting from acrylonitrile or copolymers prevalently composed of acrylonitrile (90-99% by weight with respect to the total weight of the polymer) and one or more other comonomers in a quantity generally ranging from 1 to 10% by weight with respect to the total weight of the polymer.

Preferred comonomers are both neutral vinyl compounds such as methyl acrylate, methyl methacrylate, vinyl acetate, acrylamide and the like; and compounds containing one or more acid groups such as acrylic acid, itaconic acid, sulfonated styrenes and the like, or other comonomers capable of conferring various physico-chemical characteristics to the material. Particular types of acrylic fiber are "precursor" fibers for carbon fiber: these are high-molecular-weight (80,000-200,000 Da) copolymers of acrylonitrile (90-99% by weight with respect to the total weight of the copolymer) and one or more comonomers, selected from those described above, in a quantity generally ranging from 1 to 5% by weight with respect to the total weight of the copolymer.

Modacrylic fibers, also called "modified acrylic" fibers, are also fibers obtained from polymers based on acrylonitrile generally having a medium molecular weight, containing a high percentage of halogenated comonomers capable of imparting low flammability characteristics to the manufactured products.

In modacrylic fibers, the acrylonitrile is present in a quantity ranging from 50 to 85% by weight with respect to the total weight of the polymer and one or more other comonomers are present in a quantity generally ranging from 15 to 50% by weight with respect to the total weight of the polymer. Said preferred comonomers are halogenated vinyl monomers such as vinyl chloride, vinylidene chloride, vinyl bromide and vinyl monomers containing sulfonic groups to confer dyeability to the end-fibers.

The spinning solution or dope thus obtained can be used immediately for feeding an appropriate spinning line or it can be preserved in heated tanks.

A fundamental advantage of the process according to the present invention is consequently obtaining a homogeneous spinning solution, free of clots and inhomogeneity, and wherein water is completely absent, thus also enabling the immediate use of the dope solution for all uses in which traces of water are harmful, without the necessity of intermediate phases of the process that allow the removal of the water. At the same time, DMSO or other suitable solvents can be used at 100%, obtaining a spinning solution of the highest quality in terms of homogeneity, without problems of clogging/blocking the filters.

In order to illustrate an embodiment of the process according to the present invention, reference will be made hereunder to the plant scheme represented in figure 1, in which the process can be carried out either in continuous or batchwise, preferably in continuous.

In the following scheme, the preparation of the solvent is effected by means of the "spray congealing" process.

The matrix of the aggregate polymer, coming from 1, disintegrated and premixed, is fed through line 2 to a cooling step to 5°C in 3 and to a dosing step in 4. The polymer in powder form, cooled and dosed, is fed by means of a screw conveyor or other transporting instrument 5 to a mixing element 6, where it also reaches the solid solvent in powder form.

The solvent, in fact, is fed from a storage container 7 to a freezing chamber 8, to which nitrogen, cooled in a cooling chamber 10, is also fed, through line 9.

The frozen solvent and cooled nitrogen are fed through line 11 to a cyclone 12 where the separation takes place between the solvent in powder form and the nitrogen. The exhausted gas is removed through line 13', whereas the solvent in power form is fed through line 13 to a storage container of the frozen solvent 14 and from there to a dosing system 15.

The solvent in powder form, cooled and dosed, is fed by means of a screw conveyor or other transporting instrument 16 to a mixing element 6, to which the cooled polymer in powder form is also fed.

The intimate and homogeneous mixing of the polymer in powder form with the solid solvent in powder form takes place in the mixer 6 and the mixture thus obtained is fed to the extruder 17.

A mixing of the intimate mixture of polymer and solvent in the process of melting and dissolution, is effected in the extruder 17. The homogeneous spinning solution thus obtained leaving the extruder 17, is fed to a static mixer 18 for homogenization of the dope and is fed from there, through line 19, to the spinning line or to a storage tank (not shown in figure 1).

### Examples

Some embodiment examples of the process according to the present invention are provided hereunder, together with some comparative examples, for illustrative but non-limiting purposes of the present invention.

### Example 1

### Dissolution of a high-molecular-weight acrylic copolymer (MWₙ= 75,000-100,000) composed of acrylonitrile (96% by weight with respect to the total weight of the polymer) and the pair methyl acrylate - itaconic acid (4% by weight with respect to the total weight of the polymer)

The polymer was fed together with DMSO in powder form at a temperature of 5°C to a single-screw extruder, heated as shown in figure 1. The feeding of the polymer and solvent to the extruder was effected in an industrial line for the production of spinning solution for acrylic polymer. The line consists of:
- a storage silo of the acrylic polymer;
- a "loss-in-weight" dosing apparatus, in continuous, of the polymer flow (element "4" in figure 1);
- an apparatus for the preparation of solid DMSO in powder form (elements 7, 8, 12 and 14 in figure 1);
- a dosing apparatus in continuous of DMSO in powder form (element 15 in figure 1);
- a static mixer for homogenizing the dope (element 18 in figure 1);
- a cooling exchanger for stabilizing the temperature of the dope;
- a tank for deaerating the dope at atmospheric pressure;
- a gear pump for transferring the dope;
- a battery of filter presses with selectivity cloths of 40 µm for removing possible undissolved particles;
- a battery of filter presses with selectivity cloths of 15 µm for removing possible undissolved particles;
- a tank for deaerating the dope under vacuum (5 mbar abs);
- a tank for storing the dope before spinning;
- a gear pump for transferring the dope to the spinning step;
- a tube-bundle exchanger for heating the dope before spinning;
- a battery of filter presses with selectivity cloths of 5 µm for removing undissolved particles.

The mixing process of the polymer and the solvent in powder form was carried out under the following conditions:
- polymer flow-rate 250 kg/h at a temperature of 5°C;
- flow-rate of solid DMSO in powder form 1,000 kg/h, maintained at a T = 5°C with the use of a refrigerating unit;
- temperature of the solution at the outlet of the extruder: 80°C;
- temperature of the solution at the outlet of the cooling exchanger: 70°C.

The dope produced is characterized by a viscosity at 70°C of about 300 poise.

The measurement of the viscosity was verified through a "ROTOVISCO" Haake rotational viscometer with a MCV2 rotor with a thermostatically controlled cell and also using a viscometer according to Hoppler, by verifying the falling time of a steel ball into the polymeric solution which showed a viscosity of 520 poise at 50°C.

The quality of the spinning solution obtained is determined by the absence of impurities such as undissolved polymer particles and gels. These impurities accumulate on the holes of the spinnerets jeopardizing the quality of the fiber produced.

The method for determining the quality of the spinning solution is the filterability test.

The test consists in determining the clogging rate on standard cloth (SEFAR-Nytal 5 µm) of the dope under examination.

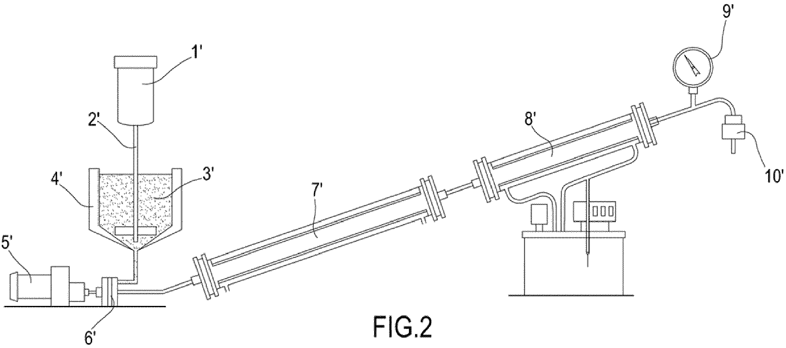

In practice, the filterability test is carried out in equipment comprising (shown in figure 2):
- a storage tank of the dope (3') with a thermostat-regulating jacket (4');
- a dosage gear pump (6');
- a heat exchanger with a jacketed tube (7') fed with vapour at 0.4 ate (length 1,400 mm, volume 90 ml);
- a heat exchanger with a jacketed tube (8') fed with water at 50°C for the thermostat-regulation of the dope;
- a manometer (9');
- a filter block (10') (cloth SEFAR-Nytal 5 µm).

In Figure 2, the motor is indicated with 1', the stirrer with 2', and the motor of the dosage pump with a servo gear unit of the "stober" type, with 5'.

The spinning solution was stored in the tank at a temperature of 50°C. The dope was then heated by means of vapour at 110°C with a flow-rate of the pump equal to 27 ml/min (residence time 3.3 min). The dope was then cooled to 50°C by means of the exchanger connected with the thermostatic water bath. The cooled dope then passed through the filter block, where the pressure was detected by means of the manometer. The clogging rate of the filter was evaluated by means of the pressure increase as ΔP in ate/h.

In the present example, the increase in ΔP in the control equipment proved to be equal to 0.37 ate/h. This increase in pressure corresponds, in an industrial situation, to correct operating conditions of the line; this value, in fact, envisages a blockage of the system due to clogging of the filter press with cloths of 5 µm, after 160 h (6.75 days); a value of 160 hours is therefore an indication of spinning continuity under optimum conditions.

The solution of polymer in solvent thus obtained was fed to a spinning line for precursors of carbon fibers.

During the spinning process, the spinnerets, immersed in a coagulation bath consisting of a mixture of water and DMSO, generated a perfectly round, compact fiber, free of cracks. The fiber thus obtained was washed with deionized water to remove the residual solvent, stretched in various steps in boiling water for about 8 times its initial length, dried on hot rollers and collected in reels. The tows obtained are composed of fibers with a diameter of about 12 microns, an average tenacity of 58 cN/Tex and an ultimate elongation of about 13%, measured on an Instron 5542 10N cell dynamometer according to the method ASTM D-3822, proving to be suitable for being transformed into carbon fiber.

### Example 2 (comparative)

### Dissolution of a high-molecular-weight acrylic copolymer (MWₙ=75,000-100,000) composed of acrylonitrile (96% by weight with respect to the total weight of the polymer) and the pair methyl acrylate-itaconic acid (4% by weight with respect to the total weight of the polymer).

The polymer was dispersed in a solution of DMSO at 100% maintained at a temperature of 20°C.

The dissolution of the polymer in the solvent solution was effected in the same industrial line used in Example 1.

The conditions for the dissolution of the polymer in the solvent solution were the following:
- flow-rate of polymer 250 kg/h at room temperature;
- flow-rate of solvent (DMSO 100%) 1,000 kg/h kept at T=20°C with the use of a cooling group;
- temperature of the solution leaving the heating exchanger 88°C;
- temperature of the solution leaving the cooling exchanger 70°C.

The viscosity of the dope produced, measured with a rotational viscometer as in Example 1, at 70°C is equal to 340 poise.

The increase in ΔP with the filterability test proved to be equal to 4.2 ate/h. This increase in pressure corresponds to the complete clogging of the filter press with cloths of 5 µm every 14.3 hours; this value is therefore an indication of a disturbed spinning due to the presence of high quantities of impurities in the dope and is incompatible with a correct operability of the production line.

The solution was in any case fed to the spinning machine described in Example 1.

The product proved to be difficult to transform, showing numerous breakages of the filaments in the coagulation bath and the impossibility of sustaining stretching in hot water to more than 4 times the initial length. These difficulties prevented the possibility of collecting sufficient quantities of finished fiber for testing its characteristics as precursor for carbon fiber.

### Example 3

### Dissolution of an acrylic copolymer for textile use having a medium molecular weight (MWₙ=40,000-55,000) composed of acrylonitrile and vinyl acetate (93/7 by weight with respect to the total weight of the polymer).

The polymer was mixed at a temperature of 5°C with DMSO in powder form according to the procedure described in Example 1.

The dope thus produced is characterized by a viscosity at 70°C of about 235 poise. The measurement of the viscosity was carried out using a "ROTOVISCO" Haake rotational viscometer with a MCV2 cylindrical rotor in a thermostatically controlled cell, and also using a viscometer according to Hoppler, verifying the falling time of a steel ball in the polymeric solution which showed a viscosity equal to 430 poise at 50°C.

The mixing of the polymer and DMSO in powder form was effected in an industrial line for the production of a spinning solution for an acrylic polymer, the same as that used in Example 1.

The conditions for mixing the polymer and DMSO in powder form were the following:
- flow-rate of polymer 300 kg/h at a temperature of 5°C;
- flow-rate of solid DMSO in powder form 900 kg/h kept at T=5°C with the use of a cooling group;
- temperature of the solution leaving the extruder: 80°C;
- temperature of the solution leaving the cooling exchanger: 70°C.

In this example, the increase in ΔP in the test carried out in the equipment of figure 2 proved to be 0.26 ate/h. This increase in pressure corresponds to the complete clogging of the filter press with cloths of 5 µm every 230 hours, equal to 9.6 days, an acceptable value from an operational point of view of the production line.

The solution of polymer in solvent thus produced was fed to a spinning line for textile fibers; the spinnerets, immersed in a coagulation bath composed of a mixture of water/solvent, create fibers free of cracks. The fibers were washed in deionized water, stretched by about 5 times the initial length, dried on hot rollers and curled in a crimping machine. The strips of fiber collected in tows (bundles of fibers) of about 110 g/m (Ktex) were subjected to steaming to obtain fibers with a denier of 3.3 dtex, a tenacity equal to about 28 cN/tex and an ultimate elongation equal to about 35%, measured on an Instron 5542 10N cell dynamometer according to the method ASTM D-3822. A fiber with these characteristics proved to be suitable for transformation into manufactured products with textile cycles typical of acrylic fibers.

### Example 4 (comparative)

### Dissolution of an acrylic copolymer for textile use having a medium molecular weight (MWₙ=40,000-55,000) composed of acrylonitrile and vinyl acetate (93/7 by weight with respect to the total weight of the polymer).

The polymer was dissolved in a solution of DMSO at 100% maintained at a temperature of 20°C.

The dissolution of the polymer in the solvent solution was effected in the same industrial line used in Example 1.

The conditions for the dissolution of the polymer in the solvent solution were the following:
- flow-rate of polymer 300 kg/h at room temperature;
- flow-rate of solvent (DMSO 100%) 900 kg/h kept at T=20°C with the use of a cooling group;
- temperature of the solution leaving the heating exchanger 85°C;
- temperature of the solution leaving the cooling exchanger 70°C.

In this example, the increase in ΔP with the filterability test is equal to 2.7 ate/h. This increase in pressure corresponds to the complete clogging of the filter press with cloths of 5 µm every 22.2 hours: this value is absolutely incompatible with the correct functioning of industrial production lines.

### Example 5

### Dissolution of an acrylic (homo-)polymer for high-performance technical uses having a very high molecular weight (MWₙ=140,000-160,000) composed of acrylonitrile alone (100% by weight).

The polymer was mixed at a temperature of 5°C with DMSO in powder form according to the procedure described in Example 1.

The conditions for mixing the polymer and DMSO in powder form were the following:
- flow-rate of polymer 250 kg/h at a temperature of 5°C;
- flow-rate of solid DMSO in powder form 1,700 kg/h kept at T=5°C with the use of a cooling group;
- temperature of the solution leaving the extruder: 100°C;
- temperature of the solution leaving the cooling exchanger: 85°C.

The dope thus produced is characterized by a viscosity at 70°C of about 280 poise, measured by means of a "ROTOVISCO" Haake rotational viscometer with a MCV2 cylindrical rotor in a thermostatically controlled cell.

The quality of the polymeric solution was evaluated as in the previous examples by means of the equipment described in figure 2, showing an increase in pressure equal to 0.48 ate/h. In the production line considered, this pressure increase corresponds to the clogging of the filter press with cloths of 5 µm every 124 hours, equal to 5.2 days; this value is sufficient for guaranteeing the continuity of the spinning under good conditions.

A comparative test was also carried out with liquid DMSO at a temperature of 20°C, using the same procedures as comparative examples 2 and 4: the increase in ΔP with the filterability test indicated a value equal to 3.6 ate/h. This value is not acceptable and corresponds to the blockage of the filters, i.e. exceeding the operating conditions of the filters in extremely short times.

## Claims

1. A process for preparing a homogeneous spinning solution for the production of acrylic or modacrylic fibers which comprises the following steps:
i) preparation of an intimate mixture of a homopolymer or copolymer of acrylonitrile in powder form with a solid solvent in powder form, at a temperature lower than the melting point of the solid solvent;
ii) gradually heating the intimate mixture of solids coming from step i) to a temperature ranging from 70°C to 150°C in a time ranging from 0.5 to 30 minutes, until the complete dissolution of the homopolymer or copolymer in the solvent and the formation of a homogeneous solution.

2. The process according to claim 1, wherein the acrylonitrile copolymer consists of acrylonitrile in a quantity ranging from 90 to 99% by weight with respect to the total weight of the copolymer and one or more comonomers in a quantity ranging from 1 to 10% by weight with respect to the total weight of the copolymer.

3. The process according to one or more of the previous claims 1-2, wherein the comonomers are selected from neutral vinyl compounds such as methyl acrylate, methyl methacrylate, vinyl acetate, acrylamide; compounds containing one or more acid groups such as acrylic acid, itaconic acid, sulfonated styrenes.

4. The process according to claim 1, wherein the acrylonitrile copolymer consists of acrylonitrile in a quantity ranging from 50 to 85% by weight with respect to the total weight of the copolymer and one or more comonomers in a quantity ranging from 15 to 50% by weight with respect to the total weight of the copolymer.

5. The process according to claim 4, wherein the comonomers are selected from halogenated vinyl monomers such as vinyl chloride, vinylidene chloride, vinyl bromide and vinyl monomers containing sulfonic groups.

6. The process according to one or more of the previous claims 1-5, wherein the polymers are high-molecular-weight polymers, said high molecular weight ranging from 80,000 to 200,000 Da, or low-molecular-weight polymers, said low molecular weight ranging from 40,000 to 55,000 Da.

7. The process according to one or more of the previous claims 1-6, wherein the solid solvent in powder form used in step i) is selected from dimethylsulfoxide (DMSO), dimethylsulfone, ethylene carbonate, mixtures of ethylene carbonate/propylene carbonate, and is preferably DMSO.

8. The process according to one or more of the previous claims 1-7, wherein the intimate mixture of polymer and solvent in powder form comprises a quantity of polymer ranging from 15 to 26% by weight with respect to the total weight of the solvent and polymer.

9. The process according to the previous claim 7 or 8, wherein step i) for the preparation of the intimate mixture of homopolymer or copolymer of acrylonitrile in powder form and solid DMSO in powder form is carried out at a temperature ranging from -5°C to 10°C.

10. The process according to one or more of the previous claims 1-9, wherein the homogeneous solution obtained at the end of step ii) is sent to a storage tank or is fed to the subsequent spinning step.
